## Europäisches Patentamt

## European Patent Office

## Office européen des brevets

(19)

(11) Veröffentlichungsnummer: **0 157 086**

**B1**

(12) # EUROPÄISCHE PATENTSCHRIFT

(45) Veröffentlichungstag der Patentschrift:
**27.04.88**

(51) Int. Cl.⁴: **F 16 D 43/28,** F 16 D 25/14

(21) Anmeldenummer: **85100557.9**

(22) Anmeldetag: **19.01.85**

(54) **Ventilsystem für eine hydraulisch gesteuerte Anfahr-Reibungskupplung, insbesondere für Kraftfahrzeuge.**

(30) Priorität: **22.03.84 DE 3410512**

(43) Veröffentlichungstag der Anmeldung:
**09.10.85 Patentblatt 85/41**

(45) Bekanntmachung des Hinweises auf die Patenterteilung:
**27.04.88 Patentblatt 88/17**

(84) Benannte Vertragsstaaten:
**BE DE FR GB IT NL SE**

(56) Entgegenhaltungen:
**DE-B-2 539 285**
**DE-B-2 539 523**
**FR-A-1 478 910**
**GB-A-995 289**
**US-A-3 862 676**
**US-A-4 111 074**

(73) Patentinhaber: **FORD- WERKE AKTIENGESELLSCHAFT, Ottoplatz 2 Postfach 21 03 69, D-5000 Köln 21 (DE)**

(84) Benannte Vertragsstaaten: **BE DE IT NL SE**

(73) Patentinhaber: **FORD MOTOR COMPANY LIMITED, Eagle Way, Brentwood Essex CM13 3BW (GB)**

(84) Benannte Vertragsstaaten: **GB**

(73) Patentinhaber: **FORD FRANCE SOCIETE ANONYME, 344 Avenue Napoléon Bonaparte B.P. 307, F-92506 Rueil Malmaison Cedex (FR)**

(84) Benannte Vertragsstaaten: **FR**

(72) Erfinder: **Bilharz, Manfred, Nikolaus- Adamstrasse 71, D-5010 Bergheim (DE)**
Erfinder: **Heider, Peter, Brüsseler Strasse 54, D-5354 Weilerswist (DE)**
Erfinder: **Röper, Hartmut, Dr., Salzburger Strasse 4, D-4019 Monheim (DE)**
Erfinder: **Henken, Fritz, Christianstrasse 11, D-5024 Pulheim (DE)**
Erfinder: **Kohl, Ernst, Oberländer Ufer 150 B, D-5000 Köln 51 (DE)**
Erfinder: **Schubert, Dietmar, Am Kochstor 14, D-5202 Hennef (DE)**
Erfinder: **Taal, Martin, Von Humboldt Strasse 27, D-5024 Pulheim (DE)**

(74) Vertreter: **Ritzkowsky, Harald, Dipl.- Ing., Ford-Werke Aktiengesellschaft Patentabteilung Z/DRR- 2 Ottoplatz 2, D-5000 Köln 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Ventilsystem für eine hydraulisch gesteuerte Anfahr-Reibungskupplung, insbesondere für Kraftfahrzeuge, nach dem Oberbegriff des Patentanspruches.

Aus der DE-B-2 539 285 sind Ventilsysteme mechanischer, hydraulischer oder elektrischer Art für hydraulisch gesteuerte Schaltkupplungen, insbesondere für Kraftfahrzeuge, zu entnehmen, bei denen ein oder mehrere Kupplungsdruck-Steuerventile den Kupplungsdruck in Abhängigkeit von der Drehmomentanforderung des Fahrers steuern und eine Ventilanordnung vorgesehen ist, die das dem Kupplungsdruck-Steuerventil zugeführte drehmomentabhängige Signal moduliert, indem es ein Verzögerungsglied in Form einer Drosselstelle in Verbindung mit einem Akkumulator aufweist.

Die bekannten Ventilsysteme weisen den Nachteil auf, daß durch die Anordnung lediglich einer Drosselblende und einem nachgeschalteten Druckspeicher die angestrebte Modulierung des drehmomentabhängigen Drucksignales nur bei einer Drehmomentanforderung, d.h., bei plötzlichem Gasgeben, wirksam werden kann. Die Modulierung des drehmomentabhängigen Drucksignales erfolgt hierbei in der Weise, daß der einer plötzlichen Zunahme der Drehmomentanforderung entsprechende hohe Kupplungsdruck erst nach einer Verzögerung wirksam wird. Der einem Akkumulator ähnliche Druckspeicher entspricht zwar einem zeitabhängigen Element, dieses wirkt jedoch nur einmalig beim Gasgeben und geht dann auf Anschlag, d. h., es wirkt nur einseitig beim Gasgeben und nicht jedoch beim Gaswegnehmen.

Da der Kupplungsdruck hierbei nur mit Verzögerung verändert wird, aber dann voll erhalten bleibt, werden spätere plötzliche Drehmomentänderungen des Motors voll auf das Getriebe übertragen.

Aus der US-A-3 862 676 ist ein Ventilsystem für eine hydraulisch gesteuerte Anfahr-Reibungskupplung, insbesondere für Kraftfahrzeuge bekannt, bei dem eine Kupplungsdruck-Regelung in Abhängigkeit von der Stellung der Drosselklappe und der Drehzahl des Verbrennungsmotors erfolgt, ohne auf mögliche Überlastungen der Kupplungen einzugehen. Das Ventilsystem sorgt während des Anfahrvorganges bzw. der Schlupfphase für eine gute Schmierung der Reibscheiben, ist jedoch die Kupplung einmal voll eingerückt, bleibt der Kupplungsdruck auch dann voll erhalten, wenn Drehmomentänderungen am Motor auftreten. Solche Drehmomentschwankungen machen sich, wenn sie auf das Getriebe übertragen werden, als störende Ungleichförmigkeiten im Antriebsverhalten des Kraftfahrzeuges bemerkbar.

Die Aufgabe der Erfindung ist es, ein Ventilsystem der im Oberbegriff des Patentanspruches erläuterten Art derart zu verbessern, daß die Ventilanordnung, die das dem Kupplungsdruck-Steuerventil zugeführte motordrehzahlabhängige Drucksignal $P_{pitot}$ moduliert, auf jede Drehmomentanweisung des Fahrers reagiert, d. h., daß sie sowohl beim Gasgeben als auch beim Gaswegnehmen wirksam wird und daß sie darüber hinaus nicht nur eine Verzögerung im Anstieg sondern vielmehr ein Absenken des Kupplungsdruckes bewirkt.

Gemäß der Erfindung wird diese Aufgabe durch die Merkmale im kennzeichnenden Teil der Patentanpruche 1 oder 3 gelöst.

Im Patentanspruch 2 ist eine zweckmäßige Ausgestaltung des Ventilsystems nach Anspruch 1 gekennzeichnet.

Dadurch, daß die dem Kupplungsdruck-Steuerventil zugeordnete Ventilanordnung aus einem Wiegeventil, einer Drosselstelle und einem Akkumulator besteht, wobei das Wiegeventil aus einem in einer Ventilbohrung angeordneten Ventilkörper mit drei Steuerbünden und beispielsweise einer an einem Ende des Ventilkörpers einwirkenden Feder besteht und ein motordrehzahlabhängiges Drucksignal $P_{pitot}$ über Leitungen jeweils zwischen dem ersten Steuerbund dem zweiten Steuerbund sowie zwischen dem zweiten Steuerbund und dem dritten Steuerbund anliegt und über Ausgänge gesteuert einer Leitung zum Kupplungsdruck-Steuerventil zuführbar ist und ein drehmomentabhängiges Drucksignal $P_{tv}$ über Leitungen an beiden Enden des Ventilkörpers einwirkt, wobei die eine Leitung die Drosselstelle enthält und das eine Ende des Akkumulators beaufschlagt, der aus einem in einer Ventilbohrung angeordneten Kolben und einer diesen belastenden Feder besteht, wird das auf das Kupplungsdruck-Steuerventil einwirkende motordrehzahlabhängige Drucksignal $P_{pitot}$ so moduliert, daß bei schnellen Änderungen der Gaspedalstellung und zwar sowohl beim Gasgeben als auch beim Gaswegnehmen das Wiegeventil aus seiner Gleichgewichtslage gebracht wird, wodurch die Zuleitung des motordrehzahlabhängigen Drucksignals zum Kuplungsventil abgesperrt wird und im Kupplungsdruck-Steuerventil dadurch ein Auslaß geöffnet wird, wodurch der Kupplungsdruck abfällt.

Durch dieses synchron mit plötzlichen Änderungen der Gaspedalstellung ablaufende Absenken des Kupplungsdruckes wird ein kurzfristiges Lösen der Reibungskupplung ermöglicht, d. h, es tritt für eine kurze Zeitspanne Schlupf in der Reibungskupplung auf, der eine ruckartige Übertragung der Drehmomentänderung vom Motor auf das Getriebe verhindert.

Durch den je nach Auslegung der Drosselstelle und der Feder ann Wiegeventil in einigen Zehntelsekunden beendete Ausgleich des drehmomentabhängigen Drucksignales $P_{tv}$ am Wiegeventil nimmt dieses wieder seine Gleichgewichtsstellung ein, wobei der Kanal zur Beaufschlagung des Kupplungsventiles mit dem motordrehzahlabhängigen Druck $P_{pitot}$ wieder geöffnet wird und der Kupplungsdruck wieder steigt, so daß die Reibungskupplung wieder sicher geschlossen wird.

Bei plötzlichen Änderungen der Gaspedalstellung, die zur Einleitung von Beschleunigungs- oder Verzögerungsvorgängen erforderlich sein können, wird so der als unangenehm empfundene Ruck verhindert, der sonst bei geschlossener Reibungskupplung infolge der direkten Übertragung der plötzlichen Drehmomentänderung des Motors auftrat. Die Vermeidung des Drehmomentänderungs-Ruckes stellt hierbei nicht nur eine Komfort-Maßnahme dar sondern dies wirkt sich auch günstig auf die Lebensdauer der Getriebeteile sowie des Antriebsstranges des Kraftfahrzeuges aus.

Die Erfindung wird anhand der in den beiliegenden Zeichnungen gezeigten Ausführungsbeispielen näher erläutert.

Es zeigt:

Fig. 1 eine schematische Anordnung einer Ausführungsform des erfindungsgemäßen Ventilsystems;

Fig. 2 eine schematische Anordnung einer weiteren Ausführungsform des erfindungsgemäßen Ventilsystems.

Ein Kupplungsdruck-Steuerventil 1 besteht aus einem in einer Ventilbohrung 2 angeordneten Ventilkörper 3 mit zwei Steuerbünden 4 und 5, dessen eines Ende über eine Feder 6 belastet ist. Leitungs- bzw. Kupplungsdruck $P_k$ wird über eine Leitung 7 und Eingänge 8 und 9 zur Ventilbohrung 2 benachbart zu den Steuerbünden 4 und 5 geführt, während ein motordrehzahlabhängiges Drucksignal $P_{pitot}$ über eine Leitung 10 die Feder 6 unterstützend auf den Ventilkörper 3 einwirkt.

Diesem an sich bekanntem Kupplungsdruck-Steuerventil 1 ist nun eine erfindungsgemäße als Lastwechseldämpfung wirksame Ventilanordnung vorgeschaltet, die aus einem Wiegeventil 11, einer Drosselstelle 12 und einem Akkumulator 13 besteht. Das Wiegeventil 11 weist einen in einer Ventilbohrung 14 angeordneten Ventilkörper 15 mit drei Steuerbünden 16, 17 und 18 auf, an dessen einen Ende eine Feder 19 einwirkt. Das motordrehzahlabhängige Drucksignal $P_{pitot}$ kommt über eine Leitung 20 und Zweigleitungen 21 und 22 jeweils zwischen dem ersten Steuerbund 16 und dem zweiten Steuerbund 17 bzw. dem zweiten Steuerbund 17 und dem dritten Steuerbund 18 in der Ventilbohrung 14 an und ist über Ausgänge 23 und 24 der Leitung 19 zum Kupplungsdruck-Steuerventil 1 zuführbar. Ein drehmomentabhängiges Drucksignal $P_{tv}$ wirkt über eine Leitung 25 und Zweigleitungen 26 und 27 auf die beiden Enden des Ventilkörpers 15 des Wiegeventiles 11 ein. In der einen Zweigleitung 27 ist hierbei die Drosselstelle 12 angeordnet und diese Leitung 27 führt auch an das eine Ende des Akkumulators 13, der in üblicher Weise aus einem in einer Ventilbohrung 28 angeordneten Kolben 29 besteht, der von einer Feder 30 belastet ist.

Bei einer schnellen Änderung der Gaspedalstellung und damit des drehmomentabhängigen Drucksignales in der Leitung 25 gelangt dieses Drucksignal infolge der Drosselstelle 12 und des Akkumulatorventils 13 unterschiedlich schnell zu den Enden des Ventilkörpers 15 des Wiegeventiles 11 und der Ventilkörper 15 bewegt sich in die Richtung des Druckgefälles. Dadurch wird die Weiterleitung des motordrehzahlabhängigen Drucksignales $P_{pitot}$ unterbrochen, d. h. dieses Drucksignal wird nicht weiter über die Leitung 10 zum Kupplungsdruck-Steuerventil 1 geführt sondern es wird stattdessen der Leitungsabschnitt 19 entlüftet.

Durch diesen Druckabfall wirkt der Kupplungsdruck auf der rechten Seite des Steuerbundes 5 nur noch gegen die Feder 6 und schiebt den Kolben 3 nach hinten, so daß der Kupplungsdruck Pk selbst kurzfristig nach Ex geschaltet wird.

Durch diese synchron mit plötzlichen Änderungen der Gaspedalstellung ablaufende Absenkung des Kupplungsdruckes wird ein Schlupf in der Reibungskupplung ermöglicht und dadurch die Übertragung von ruckartigen Drehmomentänderungen vom Motor auf das Getriebe verhindert.

Durch eine entsprechende Auslegung der Drosselstelle 12 und der Feder 19 am Ventilkörper 15 des Wiegeventiles 11 kann sichergestellt werden, daß die Ungleichgewichtsstellung des Ventilkörpers 15 nur für einige Zentelsekunden auftritt und der Ventilkörper 15 dann wieder seine ursprüngliche Gleichgewichtsstellung einnimmt, in der der Kupplungsdruck wieder erhöht und die Fahrzeugkupplung wieder geschlossen wird. Damit wird sichergestellt, daß nur für die kurze Zeitspanne zum Abdämpfen einer plötzlichen Drehmomentänderung des Motors ein Schlupf in der Reibungskupplung auftritt, die Kupplung jedoch sofort wieder ordnungsgemäß geschlossen wird.

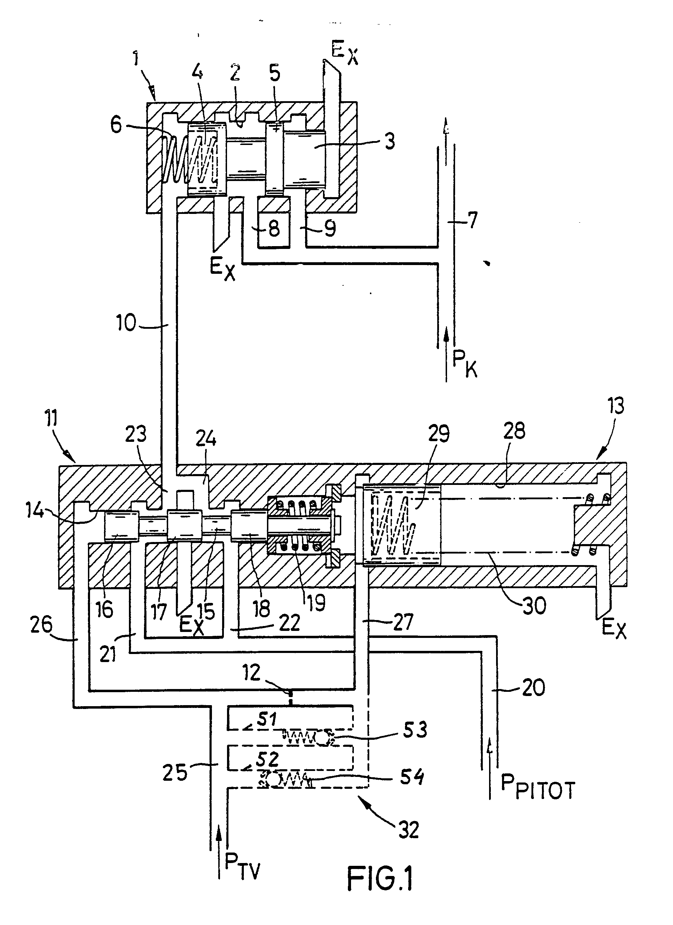

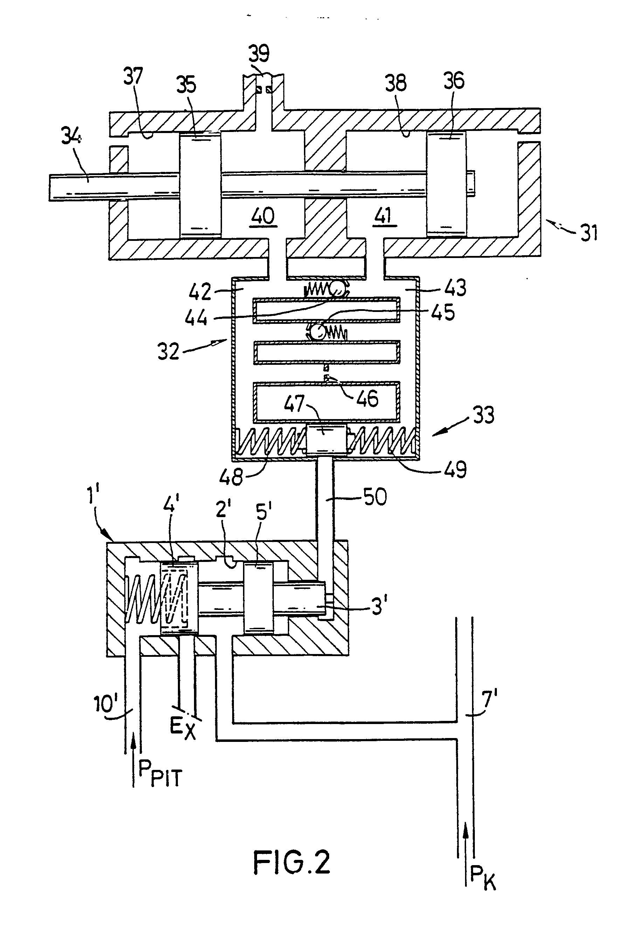

In Fig. 2 ist eine weitere Ausführungsform der Erfindung gezeigt, bei der auf den für den Volumen- und Druckausgleich erforderlichen Akkumulator 13, wie er in Fig. 1 erforderlich ist, verzichtet werden kann. Für die Betätigung eines dem Wiegeventils 15 in Fig. 1 ähnlichem Wiegeventil wird bei dieser Ausführungsform eine unmittelbare Verbindung zu dem durch die Drosselklappenbetätigung bewegten Drosselventil verwendet. Eine Bewegung des Drosselventiles wird hier mechanisch auf ein Doppelkolbenventil 31 übertragen, das auf eine Überdruckventil- und Drosselstellenanordnung 32 sowie auf ein einfacheres Wiegeventil 33 einwirkt. Das Doppelkolbenventil 31 besteht hierbei im wesentlichen aus einer Kolbenstange 34, auf der zwei Kolben 35 und 36 angeordnet sind, die in getrennten Ventilbohrungen 37 und 38 angeordnet sind und deren über eine Drosselstelle 39 mit Druckmittel beaufschlagbare Kammern 49 und 41 mit zwei Zweigleitungen 42 und 43 in Verbindung stehen, die parallel zueinander angeordnet zwei entgegengesetzt wirksame Überdruckventile 44 und 45 sowie eine enge Drosselstelle 46 und weiterhen die beiden Enden des Wiegeventiles 33 beaufschlagen.

Das Wiegeventil 33 ist hierbei als einfacher frei-beweglicher Ventilkörper 47 ausgebildet, der von zwei Federn 48 und 49 in einer eine zum Kupplungsdruck-Steuerventil 1' führende Leitung 59 absperrende Gleichgewichtslage gehalten wird..

Bei einer schnellen Bewegung der Kolbenstange 34 kann der durch die Volumenvergrößerung bzw. - verkleinerung der beiden Kammern 40 und 41 verursachte Ausgleichsstrom nur zu einem sehr geringen Anteil über die enge Drosselstelle 46 fließen und wird daher stattdessen den von den Federn 48 und 49 im Gleichgewicht enthaltenen Ventilkörper 47 des Wiegeventiles 33 in Richtung des verdrängten Ölvolumens soweit bewegen, daß kurzfristig eine Verbindung zwischen einem der beiden Zweigkanäle 42 und 43 und dem Kanal 50 zum Kupplungsdruck-Steuerventil 1' hergestellt wird. Dadurch wird das rechte Ende des Ventilkörpers 3' des Kupplungsdruck-Steuerventiles 1' entgegen dem auf das andere Ende durch die Leitung 10' einwirkenden motordrehzahlabhängigen Drucksignal $P_{pitot}$ belastet und der Ventilkörper 3' mit den beiden Steurerbünden 4' und 5' in der Ventilbohrung 2' verschoben und der Auslaß Ex aufgesteuert, wodurch in der Leitung 7' zur Kupplung ein Druckabfall auftritt, wodurch in diesem Augenblick ein leichtes Lösen und Durchrutschen der Kupplung während der schnellen Änderung der Gaspedalstellung erreicht wird.

Unabhängig von der Stellung der Kolbenstange 34 mit den Kolben 35 und 36 wird der Ventilkörper 47 des Wiegeventiles 33 durch die Federn 48 und 49 wieder in die die Verbindung zum Kanal 50 sperrende Gleichgewichtslage gebracht, da ein langsamer Volumenausgleich über die Drosselstelle 46 möglich ist.

Die Anordnung der beiden parallel zueinander angeordneten entgegengesetzt wirksamen Überdruckventile 44 und 45 wird hierbei für den Fall vorgesehen, daß bei sehr schnellen und großen Gaspedalbewegungen ein zu langes Verweilen des Wiegeventiles außerhalb seiner Gleichgewichtsstellung auftreten und damit die Kupplung zu lange gelöst bleiben würde. Die Überdruckventile 44 und 45 bewirken, daß ein gewisser Teil des verdrängten Volumens bei den dann größeren Druckunterschieden gleich über diese Ventile geführt und damit dem Regelvorgang entzogen wird.

Diese in Zusammenhang mit der Fig. 2 erläuterte Anordnung 32 von entgegengesetzt wirksamen Überdruckventilen in paralleler Anordnung zur Drosselstelle kann auch bei der in Fig. 1 gezeigten Ausführungsform der Erfindung in vorteilhafter Weise zur Anwendung kommen.

In Fig. 1 unten sind hierzu parallel zu der die Drosselstelle 12 aufnehmenden Leitung 27 zwei Zweigleitungen 51 und 52 in gestrichelten Linien angedeutet in denen zwei entgegengesetzt wirksame Überdruckventile 53 und 54 angeordnet sind. Diese entgegengesetzt wirksamen Überdruckventile 53 und 54 bewirken, daß ein gewisser Teil des verdrängten Volumens bei großen Ausschlägen und den dann größeren Druckunterschieden gleich über diese Ventile geführt und damit dem Regelvorgang entzogen wird.

**Patentansprüche**

1. Ventilsystem für eine hydraulisch gesteuerte Anfahr-Reibungskupplung, insbesondere für Kraftfahrzeuge mit einem Kupplungsdruck-Steuerventil (1), das den Kupplungsdruck ($P_k$) in Abhängigkeit von der Drehmomentanforderung ($P_{tv}$) des Fahrers steuert und mit einer Ventilanordnung (11/13), die das dem Kupplungsdruck-Steuerventil (1) zugeführte Drucksignal ($P_{pitot}$) moduliert, <u>dadurch gekennzeichnet</u>, daß dem Kupplungsdruck-Steuerventil (1) ein Wiegeventil (11), eine Drosselstelle (12) und ein Akkumulator (13) zugeordnet sind, wobei das Wiegeventil (11) aus einem in einer Ventilbohrung (14) angeordneten Ventilkörper (15) mit drei Steuerbünden (16, 17 und 18) und einer an einem Ende des Ventilkörpers (15) einwirkenden Feder (19) besteht und ein motordrehzahlabhängiges Drucksignal ($P_{pitot}$) über Leitungen (21 und 22) jeweils zwischen dem ersten Steuerbund (16) und dem zweiten Steuerbund (17) sowie dem zweiten Steuerbund (17) und dem dritten Steuerbund (18) anliegt und über Ausgänge (23 und 24) einer Leitung (10) zum Kupplungsdruck-Steuerventil (1) zuführbar ist und ein drehmomentabhängiges Drucksignal ($P_{tv}$) über Leitungen (26 und 27) an beiden Enden des Ventilkörpers (15) einwirkt, wobei in der einen Leitung (27) die Drosselstelle (12) angeordnet ist und diese Leitung (27) auch das eine Ende des Akkumulators (13) beaufschlagt, der aus einem in einer Ventilbohrung (28) angeordneten Kolben (29) und einem diese belastenden Feder (30) besteht, der Art, daß bei plötzlichen Änderungen der Gaspedalstellung und damit des drehmomentabhängigen Drucksignales ($P_{tv}$) kurzfristig die Zulieferung des motordrehzahlabhängigen Drucksignales ($P_{pitot}$) zum Kupplungsdruck-Steuerventil (1) abgesperrt und der Kupplungsdruck ($P_k$) gleichzeitig nach Ex geschaltet wird.

2. Ventilsystem nach Anspruch 1, <u>dadurch gekennzeichnet</u>, daß parallel zu der die Drosselstelle (12) aufnehmenden Leitung (27) zwei Zweigleitungen (51 und 52) mit zwei entgegengesetzt wirksamen Überdruckventilen (53 und 54) angeordnet sind.

3. Ventilsystem für eine hydraulisch gesteuerte Anfahrreibungskupplung, insbesondere für Kraftfahrzeuge mit einem Kupplungsdruck-Steuerventil (1), das den Kupplungsdruck ($P_k$) in Abhängigkeit von der Drehmomentanforderung ($P_{tv}$) des Fahrers steuert und mit einer Ventilanordnung, die das dem Kupplungsdruck-Steuerventil (1) zugeführte Drucksignal ($P_{pitot}$) moduliert, <u>dadurch gekennzeichnet</u>, daß dem Kupplungsdruck-Steuerventil (1') eine Ventilanordnung, bestehend aus einem Doppelkolbenventil (31), einer Rückschlagventil- und Drosselstellenanordnung (32) und einem Wiegeventil (33) vorgeschaltet ist, wobei das Doppelkolbenventil (31) aus auf einer Kolbenstange (34) angeordneten Kolben (35 und 36) besteht, die in getrennten Ventilbohrungen (37 und 38) angeordnet sind und deren über eine Drosselstelle (39) mit Druckmittel beschlagbare Kammern (40 und 41) über parallele Zweigleitungen (42 und 43) zwei entgegengesetzt wirksame Überdruckventile (44 und 45) sowie eine enge Drosselstelle (46) und das Wiegeventil (33) von entgegengesetzten Seiten beaufschlagen, wobei das Wiegeventil (33) aus einem frei beweglichen Ventilkörper (47), der von Federn (48 und 49) in einer einem zum Kupplungsdruck-Steuerventil (1') führenden Kanal (50) absperrenden Gleichgewichtslage gehalten wird.

## Revendications

1. Système de vannes pour un embrayage à friction actionné hydrauliquement, notamment pour véhicules automobiles, comportant une vanne-pilote de pression d'accouplement (1), qui commande la pression d'accouplement ($P_k$) en fonction du couple demandé ($P_{tv}$) par le conducteur et un dispositif de vannes (12/13) qui module le signal de pression ($P_{pitot}$) transmis à la vanne-pilote de pression d'accouplement (1), caractérisé en ce qu'il est adjoint à la vanne-pilote de pression d'accouplement (1) un distributeur (11), un passage à étranglement (12) et un accumulateur (13), le distributeur (11) étant constitué par un tiroir (15) avec trois portées de commande (16, 17 et 18) disposé dans un alésage de vanne (14) et par un ressort (19) agissant sur l'une des extrémités du tiroir, en ce qu'un signal de pression ($P_{pitot}$) proportionnel à la vitesse du moteur, apparaît par l'intermédiaire de conduits (21 et 22) respectivement disposés entre la première portée de commande (16) et la deuxième portée de commande (17), ainsi qu'entre la deuxième portée de commande (17) et la troisième portée de commande (18) et peut être dirigé par des sorties (23 et 24) sur un conduit (10) relié à la vanne-pilote de pression d'accouplement (1), et en ce qu'un signal de pression ($P_{tv}$) proportionnel au couple agit par l'intermédiaire de conduits (26 et 27) aux deux extrémités du tiroir (15), dont l'un des conduits (27) contient le point d'étranglement (12) et atteint également une extrémité de l'accumulateur (13), lui-même constitué par une portée (29) disposée dans un alésage de vanne (28) et par un ressort (30) chargeant celle-ci, de telle sorte qu'en cas de brusques modifications de la position de la pédale d'accélérateur et, par suite, du signal de pression ($P_{tv}$) proportionnel au couple, l'arrivée du signal de pression ($P_{pitot}$) à la vanne-pilote de pression d'accouplement (1) se trouve bloquée et que la pression d'accouplement ($P_k$) soit, en même temps, dirigée vers Ex.

2. Système de vannes selon la revendication 1, caractérisé en ce qu'il est disposé, parallèlement au conduit (27) contenant le passage à l'étranglement (12), deux conduits dérivés (51 et 52) dans lesquels sont disposées deux clapets de surpression (53 et 54) agissant en sens opposé.

3. Système de vannes pour un embrayage à friction actionné hydrauliquement, notamment pour véhicules automobiles, comportant une vanne-pilote de pression d'accouplement (1), qui commande la pression d'accouplement ($P_k$) en fonction du couple ($P_{tv}$) demandé par le conducteur et un dispositif de vannes qui module le signal de pression ($P_{pitot}$), transmis à la vanne-pilote de pression d'accouplement (1), caractérisé en ce qu'il est monté en amont de la vanne-pilote de pression d'accouplement (1') un dispositif de vannes, constitué par une vanne a double piston (31), un dispositif avec clapet anti-retour et passage à étranglement (32) et un distributeur (33), la vanne à double piston (31) étant constituée par des pistons (35 et 36) disposés sur une tige de piston (34) et ménagés dans des alésages de vanne séparés (36 et 38) et dont les chambres (40 et 41) sont susceptibles d'être atteintes par un fluide de pression s'écoulant par un passage à étranglement (39) au moyen de deux dérivations (42 et 43) parallèles qui atteignent deux clapets de surpression (44 et 45) agissant en sens opposé, ainsi qu'un étroit passage à étranglement (46) et le distributeur (33) par ses côtés opposés, le distributeur (33) étant, pour sa part, constitué par un simple tiroir (47) à déplacement libre, qui est maintenu par des ressorts (48 et 49) dans une position d'équilibre bloquant le canal (50) menant à la vanne-pilote de pression d'accouplement (1').

## Claims

1. A valve system for a hydraulically controlled starting friction clutch, in particular for motor vehicles, with a clutch pressure control valve (1) controlling the clutch pressure ($P_k$) in dependence on the torque demand ($P_{tv}$) of the driver and with a valve arrangement (11/13) modulating the pressure signal ($P_{pitot}$) fed to the clutch pressure control valve (1), <u>characterized in that</u> a shuttle valve (11), an orifice (12) and an accumulator (13) are allocated to the clutch pressure control valve (1), the shuttle valve (11) comprising a valve member (15) with three control lands (16, 17 and 18) disposed in a valve bore (14) and a spring (19) acting upon one end of the valve member (15), a pressure signal way of lines (21 and 22) between the first control land (16) and the second control land (17) and/or respectively between the second control land (17) and the third control land (18) and is applicable by way of outlets (23 and 24) of a line (10) to the clutch pressure control valve (1) and a pressure signal $(P_{tv})$ dependent upon the torque acts by way of lines (26 and 27) upon both ends of the valve member (15), with the orifice (12) disposed in line (27) and this line leading also to one end of the accumulator (13) comprising a piston (29) disposed in a valve bore (28) and acted upon by a spring (30), so that in the event of sudden changes in the position of the accelerator pedal and thereby in the torque-dependent pressure signal $(P_{tv})$ the supply of the engine-speed dependent pressure signal $(P_{pitot})$ to the clutch pressure control valve (1) is briefly blocked and the clutch pressure $(P_k)$ simultaneously switched to the exhaust $E_x$.

2. A valve system according to claim 1, characterized in that two branch lines (51 and 52) with two inversely acting pressure relief valves (53 and 54) are arranged in parallel to the line (27) comprising the orifice (12).

3. A valve system for a hydraulically controlled starting friction clutch, in particular for motor vehicles, with a clutch pressure control valve (1) controlling the clutch pressure $(P_k)$ in dependence on the torque demand $(P_{tv})$ of the driver and with a valve arrangement modulating the pressure signal $(P_{pitot})$ fed to the clutch pressure control valve (1), characterized in that a valve arrangement, consisting of a double-piston valve (31), a pressure relief valve and orifice arrangement (32) and a shuttle valve (33) is inserted in front of the clutch pressure control valve (1'), the double-piston valve (31) comprising pistons (35 and 36) arranged on a piston rod (34) with the pistons disposed in separate valve bores (37 and 38) and whose chambers (40 and 41), which can be supplied with a pressure medium by way of an orifice (39), load by way of parallel branch lines (42 and 43) two inversely acting pressure relief valves (44 and 45) as well as a narrow orifice (46) and the shuttle valve (33) from opposite sides, the shuttle valve (33) comprising a freely movable valve member (47) held by springs (48 and 49) in an equilibrium position in which it blocks a duet (50) leading to the clutch pressure control valve (1').

0 157 086

FIG.1

FIG.2